# EUROPÄISCHE PATENTSCHRIFT

(11) **EP 0 316 721 B1**
(45) Veröffentlichungstag und Bekanntmachung des Hinweises auf die Patenterteilung: **02.02.1994**
(21) Anmeldenummer: 88118605.0
(22) Anmeldetag: 09.11.1988
(51) Int. Cl.: H04M 1/53

(54) **Elektronische Erdtaste**
Electronic earth key
Touche de terre électronique

(30) Priorität: 13.11.1987 DE 3738555
(43) Veröffentlichungstag der Anmeldung: 24.05.1989
(73) Patentinhaber: Alcatel SEL Aktiengesellschaft, D-70435 Stuttgart (DE); ALCATEL N.V., NL-1077 XX Amsterdam (NL)
(72) Erfinder: Elsässer, Martin, D-7254 Hemmingen (DE)
(74) Vertreter: Gähr, Hans-Dieter, Dipl.-Ing. (FH)

(56) Entgegenhaltungen:
- DE-A- 3 541 546
- GB-A- 2 132 447

## Beschreibung

Die Erfindung betrifft eine elektronische Erdtaste für ein Fernsprechendgerät gemäß dem Oberbegriff des Patentanspruchs 1.

Eine Erdtaste eines Fernsprechendgerätes wird, üblicherweise in Nebenstellenanlagen, zur Herstellung einer Amtsverbindung oder zum Einleiten von Umschaltvorgängen, wie Rückfragen oder Umlegen von Verbindungen eingesetzt. Durch das Betätigen der Erdtaste wird eine Fernmeldeerdleitung kurzzeitig mit einer Teilnehmerleitung verbunden, d.h. eine Erdung der beiden Adern der Teilnehmerleitung vorgenommen.

Diese Erdfunktion wurde bisher mittels einer elektromechanischen Taste realisiert. In modernen Fernsprechendgeräten werden zur Kosteneinsparung immer häufiger Gummimatten-Kontakte verwendet, die in der Regel hohe ohmsche Kontaktwiderstände aufweisen und somit für eine notwendigerweise niederohmige Erdfunktion nicht einsetzbar sind.

Weiterhin ist es bekannt (DE-OS 35 41 546) eine Verbindung einer Fernmeldeerdleitung mit einer Teilnehmerader über einen als Feldeffekttransistor ausgebildeten Schalter herzustellen.

Die technische Aufgabe der Erfindung besteht darin, eine elektronische Erdtaste so zu realisieren, daß die Fernmeldeerdleitung möglichst niederohmig mit der Teilnehmerleitung verbindbar ist.

Eine Lösung dieser Aufgabe erfolgt erfindungsgemäß mit der im Patentanspruch 1 angegebenen technischen Lehre.

Die elektronische Erdtaste gemäß der Erfindung weist nur einen zu vernachlässigenden ohmschen Widerstand im sogenannten Erdweg, d.h. zwischen der Fernmeldeerdleitung und der Teilnehmerleitung während der Erdung auf, da sich im Erdweg nur leitende Feldeffekttransistoren befinden. Aufgrund der Verwendung von Feldeffekttransistoren ergibt sich als weiterer Vorteil eine sehr geringe Leistungsaufnahme während der Erdung.

Die Feldeffekttransistoren sind einfach über eine ohnehin vorhandene Rechnereinheit des Fernsprechendgerätes ansteuerbar, um automatisch eine Erdung aufgrund einer abgespeicherten Steuerinformation einzuleiten. Dadurch sind bisher bekannte elektromechanische Erdtasten völlig ersetzbar.

Außerdem sind auch Tasten mit kostengünstigen Gummimatten-Kontakten verwendbar, in dem eine Betätigung einer solchen Taste durch die Rechnereinheit erkannt wird und diese wiederum eine Erdung veranlaßt.

Ferner weist die elektronische Erdtaste einen hohen Isolationswiderstand im gesperrten Zustand auf, ist überspannungsfest (wird durch die zulässige Sperrspannung der Feldeffekttransistoren bestimmt) und die parasitäre Rückwärtsdiode des Feldeffekttransistors des Schaltelementes dient als Verpolungsschutz.

Vorteilhafte Ausgestaltungen der Erfindung sind den Unteransprüchen zu entnehmen.

Zwei Ausführungsbeispiele werden im folgenden anhand der Zeichnungen erläutert. Es zeigen:
- Fig. 1: ein erstes Schaltbild einer elektronischen Erdtaste gemäß der Erfindung
- Fig. 2: ein zweites Schaltbild einer elektronischen Erdtaste gemäß der Erfindung.

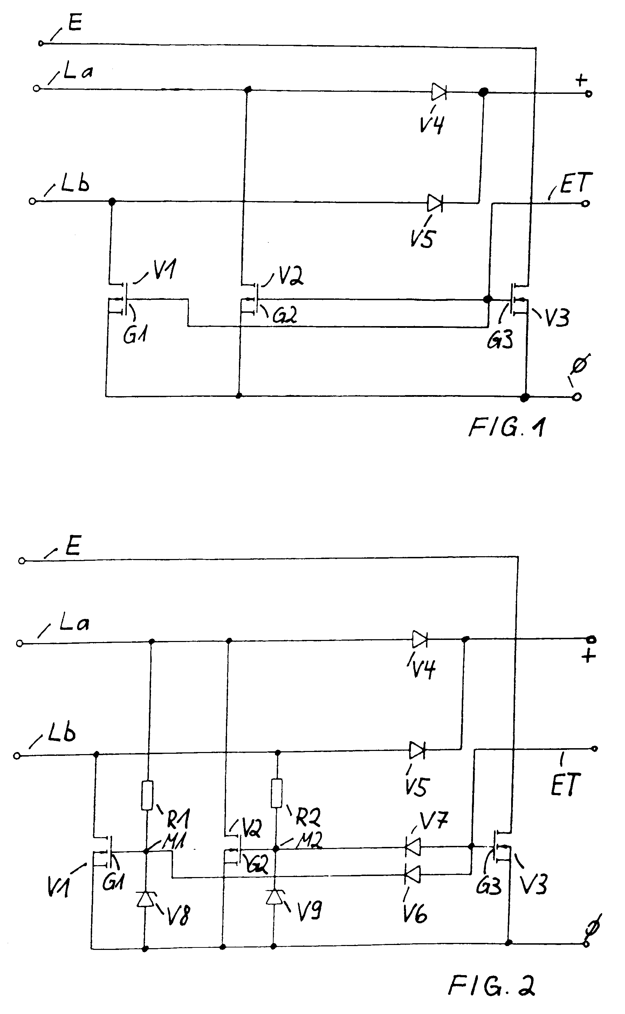

Eine elektronische Erdtaste für ein Fernsprechendgerät, wie in Fig. 1 gezeigt, weist ein als Feldeffekttransistor V3 ausgebildetes Schaltelement auf. Zur Herstellung einer Erdverbindung ist eine Fernmeldeerdleitung E über die Drain-Source-Strecke des Feldeffekttransistor V3 mit einer zweiadrigen Teilnehmerleitung La, Lb verbindbar. Die Teilnehmerleitung ist mit einer Zweiweggleichrichterbrückenschaltung V1, V2, V4, V5 verbunden, die in einem ersten Gleichrichtweg eine erste Diode V4 und einen ersten Feldeffekttransistor V1 und in einem zweiten Gleichrichtweg eine zweite Diode V5 und einem zweiten Feldeffekttransistor V2 enthält.

Dabei ist eine erste Ader La der Teilnehmerleitung über die erste in Durchlaßrichtung angeschlossene Diode V4 mit einem ersten, positives Potential aufweisenden Abgriff + und über die Drain-Source-Strecke des zweiten Feldeffekttransistors V2 mit einem zweiten, Erdpotential aufweisenden Abgriff 0 der Zweiweggleichrichterbrückenschaltung verbunden. Analog dazu ist eine zweite Ader Lb der Teilnehmerleitung über die zweite, in Durchlaßrichtung angeschlossene Diode V5 mit dem ersten Abgriff + und über die Drain-Source-Strecke des ersten Feldeffekttransistors V1 mit dem zweiten Abgriff 0 verbunden.

Ferner sind, wie Fig. 1 zeigt, die Drain-Source-Strecken des ersten und des zweiten Feldeffekttransistors V1, V2 zueinander parallel und zur Source-Drain-Strecke des Feldeffekttransistors V3 des Schaltelementes in Reihe geschaltet. Der Gate-Anschuß G3 dieses Feldeffekttransistors V3 und die Gate-Anschlüsse G1, G2 des ersten und des zweiten Feldeffekttransistors V1, V2 sind zur gleichzeitigen Ansteuerung mit einer gemeinsamen Steuerleitung ET verbunden.

Als Feldeffekttransistoren, vgl. Fig. 1 und 2, werden n-Kanal Metalloxidfeldeffekttransistoren vom Anreicherungstyp verwendet.

Aufgrund der Zweiweggleichrichterbrückenschaltung V1, V2, V3, V4 ist auf eine spezielle Polung der an der Teilnehmerleitung La, Lb anliegenden Schleifenspannung nicht zu achten. Dadurch ist die Stromversorgung des zwischen dem ersten Abgriff + und dem zweiten Abgriff 0 liegenden Fernsprechendgerätes polungsunabhängig.

Um eine Erdung zu veranlassen, wird über die Steuerleitung ET ein positives Potential gleichzeitig an alle Gate-Anschlüsse der Feldeffekttransistoren V1, V2, V3 angelegt.

Dadurch werden gleichzeitig der Feldeffekttransistor V3 des Schaltelements sowie die beiden Feldeffekttransistoren V1, V2 im ersten und im zweiten Gleichrichtweg leitend. Damit wird eine sehr niederohmige Verbindung der Fernmeldeerdleitung E mit der ersten Ader La und gleichzeitig mit der zweiten Ader Lb hergestellt. Es liegen im Erdweg, d.h. zwischen der Fenmeldeerdleitung und der Teilnehmerleitung La, Lb lediglich die zu vernachlässigenden ohmschen Widerstände der leitenden Feldeffekttransistoren V1, V2, V3.

Liegt dagegen an der Steuerleitung ET ein Erdpotential 0 an, so sind die Feldeffekttransistoren V1, V2, V3 alle gesperrt und es liegt eine sehr hochohmige Trennung zwischen der Erdpotential führenden Fernmeldeerdleitung E und der Teilnehmerleitung La, Lb vor.

Das Anlegen eines entsprechenden Potentials an die Steuerleitung ET kann in vorteilhafterweise durch eine Rechnereinheit (nicht dargestellt) des Fernsprechendgerätes gesteuert werden.

Dazu ist die Rechnereinheit mit der Steuerleitung ET verbunden, um eine Erdung automatisch aufgrund einer abgespeicherten Steuerinformation einzuleiten. Soll z.B. eine Amtsverbindung hergestellt werden, so wird automatisch, gesteuert durch die Rechnereinheit, ein entsprechendes Potential an die Steuerleitung ET angelegt.

Ferner sind auch Tasten mit kostengünstigen Gummimatten-Kontakten verwendbar, die einen hohen ohmschen Kontaktwiderstand aufweisen. Eine Betätigung einer solchen Taste wird durch die Rechnereinheit erkannt und diese veranlaßt, daß an die Steuerleitung ET ein entsprechendes Potential angelegt wird.

Ein weiteres Ausführungsbeispiel der erfindungsgemäßen Erdtaste ist in Fig. 2 dargestellt.

Der Grundaufbau entspricht dabei der in Fig. 1 gezeigten Schaltung, so daß im folgenden nur auf die über Fig. 1 hinausgehende Ausgestaltung eingegangen wird.

Die gemeinsame Steuerleitung ET ist einerseits mit dem Gate-Anschluß G3 des Feldeffekttransistors V3 des Schaltelementes verbunden, andererseits aber über eine, in Durchlaßrichtung angeschlossene, dritte Diode (V6) mit dem Gate-Anschluß G1 des ersten Feldeffekttransistors V1 und über eine, in Durchlaßrichtung angeschlossene, vierte Diode V7 mit dem Gate-Anschluß G2 des zweiten Feldeffekttransistors V2 verbunden. Weiterhin ist die erste Ader La über eine erste Reihenschaltung aus einem ersten ohmschen Widerstand R1 und einer ersten Zenerdiode V8 mit dem zweiten Abgriff 0 der Zweiweggleichrichterbrückenschaltung und die zweite Ader Lb über eine zweite Reihenschaltung aus einem zweiten ohmschen Widerstand R2 und einer zweiten Zenerdiode V9 ebenfalls mit dem zweiten Abgriff 0 verbunden. Ein Mittelabgriff M1 der ersten Reihenschaltung und ein Mittelabgriff M2 der zweiten Reihenschaltung sind an den Gate-Anschluß G1 des ersten Feldeffekttransistors V1 bzw. an den Gate-Anschluß G2 des zweiten Feldeffekttransistors V2 angeschlossen.

Die in Fig. 2 dargestellte Zweiweggleichrichterbrückenschaltung ermöglicht ebenfalls eine von der Polung der Teilnehmerschaltung La, Lb unabhängige Stromversorgung des an die Abgriffe +, 0 angeschlossenen (nicht dargestellten) Fernsprechendgerätes.

Liegt auf der ersten Ader La ein positives Potential an, so ist die erste Diode V4 im leitenden und die zweite Diode V5 im sperrenden Zustand. Gleichzeitig wird durch die am ersten Widerstand R1 anliegende Spannung der erste Feldeffekttransistor V1 leitend, wobei der zweite Feldeffekttransistor V2 (über den zweiten ohmschen Widerstand R2 liegt Erdpotential 0 an) sperrt, so daß am ersten Abgriff + der Zweiweggleichrichterbrückenschaltung ein positives Potential zur Verfügung steht.

Analog wird im Falle eines positiven Potentials auf der zweiten Ader Lb die zweite Diode V5 leitend, die erste Diode V4 sperrt, der zweite Feldeffekttransistor V2 wird leitend und der erste Feldeffekttransistor V1 sperrt, so daß wiederum am ersten Abgriff + ein positives Potential zur Versorgung des Fernsprechendgerätes zur Verfügung steht.

Um eine Erdung zu veranlassen, wird wieder (wie in Fig. 1) über die Steuerleitung ET ein positives Potential gleichzeitig an den Gate-Anschluß G3 des Feldeffekttransistors V3 des Schaltelements, sowie jetzt über die dritte Diode V6 und die vierte Diode V7 (beide in Durchlaßrichtung angeschlossen) an den Gate-Anschluß G1 des ersten Feldeffekttransistors V1 bzw. an den Gate-Anschluß G2 des zweiten Feldeffekttransistors V2 angelegt. Damit findet wieder, entsprechend der Erdtaste nach Fig. 1, eine sehr niederohmige Verbindung der Fernmeldeerdleitung E mit der ersten Ader La und der zweiten Ader Lb statt.

Wird dagegen ein Erdpotential 0 an die Steuerleitung ET angelegt, so sind die dritte Diode V6 und die vierte Diode V7, sowie der Feldeffekttransistor V3 im Sperrzustand, so daß eine sehr hochohmige Trennung zwischen der Fernmeldeerdleitung E und der Teilnehmerleitung La, Lb vorliegt.

Die im ersten Ausführungsbeispiel (Fig. 1) beschriebene elektronische Erdtaste weist gegenüber der Variante des zweiten Ausführungsbeispiels eine höhere Brückenspannung, aber einen niedrigeren Leckstrom auf, so daß je nach Erfordernis die eine oder andere Ausgestaltung gewählt werden kann.

Beide Ausgestaltungen der erfindungsgemäßen elektronischen Erdtaste sind sehr kostengünstig realisierbar und ermöglichen einen Ersatz einer herkömmlichen elektromechanischen Erdtaste mittels einfacher elektronischer Bauelemente.

## Patentansprüche

1. Elektronische Erdtaste für ein Fernsprechendgerät mit einem als Feldeffekttransistor (V3) ausgebildeten Schaltelement, wobei eine Fernmeldeerdleitung (E) über die Drain-Source-Strecke des Feldeffekttransistors (V3) mit einer zweiadrigen Teilnehmerleitung (La, Lb) verbindbar ist, **dadurch gekennzeichnet,** daß die Teilnehmerleitung (La, Lb) mit einer Zweiweggleichrichterbrückenschaltung (V1, V2, V4, V5) verbunden ist, daß der erste Gleichrichtweg eine erste Diode (V4) und einen ersten Feldeffekttransistor (V1) und der zweite Gleichrichtweg eine zweite Diode (V5) und einen zweiten Feldeffekttransistor (V2) enthalten, daß die Drain-Source-Strecke des ersten Feldeffekttransistors (V1) und die Drain-Source-Strecke des zweiten Feldeffekttransistors (V2) zueinander parallel und zur Source-Drain-Strecke des Feldeffekttransistors (V3) des Schaltelementes in Reihe liegen, und daß der Gate-Anschluß (G3) des Feldeffekttransistors (V3) des Schaltelements sowie die Gate-Anschlüsse (G1, G2) des ersten und des zweiten Feldeffekttransistors (V1, V2) mit einer gemeinsamen Steuerleitung (ET) verbunden sind, über die ein eine Erdung veranlassendes Steuerpotential anlegbar ist.

2. Elektronische Erdtaste nach Anspruch 1, dadurch gekennzeichnet, daß eine erste Ader (La) der Teilnehmerleitung über die erste in Durchlaßrichtung angeschlossene Diode (V4) mit einem ersten, positives Potential aufweisenden Abgriff (+) und über die Drain-Source-Strecke des zweiten Feldeffekttransistors (V2) mit einem zweiten, Erdpotential aufweisenden Abgriff (0) der Zweiweggleichrichterbrückenschaltung verbunden ist und daß eine zweite Ader (Lb) der Teilnehmerleitung über die zweite in Durchlaßrichtung angeschlossene Diode (V5) mit dem ersten Abgriff (+) und über die Drain-Source-Strecke des ersten Feldeffekttransistors (V1) mit dem zweiten Abgriff (0) verbunden ist.

3. Elektronische Erdtaste nach Anspruch 2, dadurch gekennzeichnet, daß die Steuerleitung (ET) über eine in Durchlaßrichtung angeschlossene dritte Diode (V6) mit dem Gate-Anschluß (G1) des ersten Feldeffekttransistors (V1) und über eine in Durchlaßrichtung angeschlossene vierte Diode (V7) mit dem Gate-Anschluß (G2) des zweiten Feldeffekttransistors (V2) verbunden ist, daß die erste Ader (La) über eine erste Reihenschaltung aus einem ersten ohmschen Widerstand (R1) und einer ersten Zenerdiode (V8) mit dem zweiten Abgriff (0) verbunden ist, daß die zweite Ader (Lb) über eine zweite Reihenschaltung aus einem zweiten ohmschen Widerstand (R2) und einer zweiten Zenerdiode (V9) mit dem zweiten Abgriff (0) verbunden ist, und daß ein Mittelabgriff (M1) der ersten Reihenschaltung und ein Mittelabgriff (M2) der zweiten Reihenschaltung mit dem Gate-Anschluß (G1) des ersten Feldeffekttransistors (V1) bzw. mit dem Gate-Anschluß (G2) des zweiten Feldeffekttransistors (V2) verbunden sind.

4. Elektronische Erdtaste nach einem der vorhergehenden Ansprüche, dadurch gekennzeichnet, daß die Steuerleitung (ET) mit einer Rechnereinheit des Fernsprechendgerätes verbunden ist und daß die Rechnereinheit eine eine Erdung veranlassende Steuerinformation abgespeichert hat, um eine Erdung automatisch zu veranlassen.

5. Elektronische Erdtaste nach einem der Ansprüche 1 bis 3, dadurch gekennzeichnet, daß die Steuerleitung (ET) mit einer Rechnereinheit des Fernsprechendgerätes verbunden ist, um infolge einer Betätigung einer Taste mit hohem ohmschen Kontaktwiderstand eine Erdung zu veranlassen.

## Claims

1. Electronic earth key for a telephone terminal with a switching element designed as a field effect transistor (V3) in which a telecommunications earth wire (E) can be connected to a two-wire subscriber line (La, Lb) via the drain-source section of the field effect transistor (V3), characterized in that the subscriber line (La, Lb) is connected to a full-wave rectifier bridge circuit (VI, V2, V4, V5), that the first rectifying path contains a first diode (V4) and a first field effect transistor (V5) and the second rectifying path contains a second diode (V5) and a second field effect transistor (V2), that the drain-source section of the first field effect transistor (V1) and the drain-source section of the second field effect transistor (V2) are parallel to each other and in series with the source-drain section of the field effect transistor (V3) of the switching element, and that the gate terminal (G3) of the field effect transistor (V3) of the switching element and the gate terminals (G1, G2) of the first and second field effect transistors (V1, V2) are connected to a common control line (ET) via which a control potential which instigates earthing can be applied.

2. Electronic earth key according to Claim 1, characterized in that a first wire (La) of the subscriber line is connected via the first diode (V4) connected in the forward direction, to a first tap (+) having positive potential and via the drain-source section of the second field effect transistor (V2) to a second tap (O) having earth potential of the full-wave rectifier bridge circuit and that a second wire (Lb) of the subscriber line is connected via the second diode (V5) connected in the forward direction, to the first tap (+) and via the drain-source section of the first field effect transistor (V1) to the second tap (0).

3. Electronic earth key according to Claim 2, characterized in that the control line (ET) is connected via a third diode (V6) connected in the forward direction to the gate terminal (G1) of the first field effect transistor (V1) and via a fourth diode (V7) connected in the forward direction to the gate terminal (G2) of the second field effect transistor (V2), that the first wire (La) is connected via a first series circuit from a first ohmic resistor (R1) and a first Zener diode (V8) to the second tap (0), that the second wire (Lb) is connected via a second series circuit from a second ohmic resistor (R2) and a second Zener diode (V9) to the second tap (0), and that a centre tap (M1) of the first series circuit and a centre tap (M2) of the second series circuit are connected to the gate terminal (G1) of the first field effect transistor (V1) and the gate terminal (G2) of the second field effect transistor (V2).

4. Electronic earth key according to one of the preceding Claims, characterized in that the control line (ET) is connected to a computer unit of the telephone receiver unit and that the computer unit has stored control data instigating earthing in order to instigate earthing automatically.

5. Electronic earth key according to one of Claims 1 to 3, characterized in that the control line (ET) is connected to a computer unit of the telephone receiver unit in order to instigate earthing as a result of the operation of a key with high ohmic contact resistance.

## Revendications

1. Touche de terre électronique pour un terminal téléphonique, comportant un élément de commutation conçu sous forme de transistor à effet de champ (V3), touche dans le cas de laquelle une ligne de terre de télécommunication (E) peut, par l'intermédiaire de l'élément de circuit drain-source du transistor à effet de champ (V3), se relier avec une ligne d'abonné à deux conducteurs (La, Lb), touche caractérisée par le fait que la ligne d'abonné (La, Lb) est reliée à un circuit de pont redresseur à deux alternances (V1, V2, V4, V5), par le fait que le premier chemin redresseur contient une première diode (V4) et un premier transistor à effet de champ (V1) et que le second chemin redresseur contient une seconde diode (V5) et un second transistor effet de champ (V2), par le fait que l'élément de circuit drain-source du premier transistor à effet de champ (V1) et l'élément de circuit drain-source du second transistor à effet de champ (V2) sont montés en parallèle l'un à l'autre et en série avec l'élément de circuit source-drain du transistor à effet de champ (V3) de l'élément de commutation, et par le fait que la borne de grille (G3) du transistor à effet du champ (V3) de l'élément de commutation ainsi que les bornes de grille (G1, G2) du premier et du second transistors à effet de champ (G1, G2) sont reliées avec une ligne de commande commune (ET) par l'intermédiaire de laquelle peut apparaitre un potentiel de commande provoquant une mise à la terre.

2. Touche de terre électronique selon la revendication 1, caractérisée par le fait qu'un premier conducteur (La) de la ligne d'abonné est relié, par l'intermédiaire de la première diode (V4), montée dans le sens de passage, avec une première prise (+), présentant un potentiel positif, du circuit de pont redresseur à deux alternances et, par l'intermédiaire de l'élément de circuit drain-source du second transistor à effet de champ (V2), avec une seconde prise (O), présentant le potentiel de terre de ce circuit de pont, et par le fait qu'un second conducteur (Lb) de la ligne d'abonné est relié, par l'intermédiaire de la seconde diode (V5), montée, dans le sens de passage, avec la première prise (+) et, par l'intermédiaire de l'élément de circuit drain-source du premier transistor à effet de champ (V1), avec la seconde prise (O).

3. Touche de terre électronique selon la revendication 2, caractérisée par le fait que la ligne de commande (ET) est reliée, par l'intermédiaire d'une troisième diode (V6), montée dans le sens de passage, avec la borne de grille (G1 du premier transistor à effet de champ (V1) et, par l'intermédiaire d'une quatrième diode (V7), montée dans le sens de passage, avec la borne de grille (G2) du second transistor à effet de champ (V2), par le fait que le premier conducteur (La) est relié, par l'intermédiaire d'un premier circuit de série constitué d'une première résistance ohmique (R1) et d'une première diode Zener (V8), avec la seconde prise (O), par le fait que le second conducteur (Lb) est relié, par l'intermédiaire d'un second circuit de série constitué d'une seconde résistance ohmique (R2) et d'une seconde diode Zener (V9), avec la seconde prise (O), et par le fait qu'une prise médiane (M1) du premier circuit de série et une prise médiane (M2) du second circuit de série sont reliées, l'une avec la borne de grille (G1) du premier transistor à effet de champ (V1) et l'autre, avec la borne de grille (G2) du second transistor à effet de champ (V2).

4. Touche de terre électronique selon l'une des revendications précédentes, caractérisée par le fait que la ligne de commande (ET) est reliée avec une unité de calcul du terminal téléphonique et par le fait que l'unité de calcul a mémorisé une information de commande provoquant la mise à la terre pour provoquer automatiquement la mise à la terre.

5. Touche de terre électronique selon l'une des revendications 1 à 3, caractérisée par le fait que la ligne de commande (ET) est reliée avec une unité de calcul du terminal téléphonique pour provoquer une mise à la terre à la suite de la manoeuvre d'une touche à résistance ohmique de contact élevée.
